(19) Europäisches Patentamt
European Patent Office
Office européen des brevets

(11) **EP 4 517 617 A1**

(12) **EUROPEAN PATENT APPLICATION**

(43) Date of publication:
**05.03.2025 Bulletin 2025/10**

(21) Application number: **23193635.2**

(22) Date of filing: **28.08.2023**

(51) International Patent Classification (IPC):
***G06Q 10/063*** *(2023.01)*

(52) Cooperative Patent Classification (CPC):
**G06Q 10/00; G06Q 10/063; G06Q 10/10;
G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BASF SE
67056 Ludwigshafen am Rhein (DE)**

(72) Inventors:
• **Becker, Markus Bernhardt
67061 Ludwigshafen am Rhein (DE)**
• **Beckert, Verena
Zhanjiang 524002 (CN)**
• **Arcos-Diaz, Dario
67061 Ludwigshafen am Rhein (DE)**
• **Engel, Daniel
67061 Ludwigshafen am Rhein (DE)**
• **Pack, Robert
67061 Ludwigshafen am Rhein (DE)**

(74) Representative: **Eisenführ Speiser
Patentanwälte Rechtsanwälte PartGmbB
Postfach 10 60 78
28060 Bremen (DE)**

(54) **CHEMICAL PLANT AND METHOD OF CONTROLLING A CHEMICAL PLANT**

(57)  A chemical plant (1) is provided with a first production facility (200) to produce fuel gas (201) as a product or a byproduct and a second production facility (300) arranged downstream from the first production facility (200) to consume fuel gas (201) produced by the first production facility (200) and to consume natural gas if an amount of fuel gas produced by the first production facility is not sufficient for an operation of the second production facility (300). The chemical plant (1) comprises a controller (100) configured to control an operation of the second production facility (300) based on a term in an objective function to reduce a temporal variation of a consumption of fuel gas by the second production facility (300) and a second term in the objective function to reduce a deviation of a demand for fuel gas by the second production facility (300) with a constraint that the second production facility does not consume more gas than the amount of fuel gas provided by the first production facility (200).

FIG.2

## Description

FIELD OF THE INVENTION

The invention relates to a chemical plant as well as a method of controlling a chemical plant.

BACKGROUND OF THE INVENTION

Chemical plants can have a plurality of production facilities. A production facility downstream from a further production facility may use or consume an output of an upstream production facility or may consume by-products of an upstream production facility.

A chemical plant can refer to any manufacturing facility based on chemical processes, i.e. transforming a feedstock to a product using a chemical process. In contrast to discrete manufacturing, chemical manufacturing is based on continuous or batch processes.

SUMMARY OF THE INVENTION

The object of the present invention is to provide a chemical plant and a method for controlling a chemical plant with an improved sustainability footprint.

This object is solved by a chemical plant according to claim 1 as well as a method for controlling a chemical plant according to claim 4.

Therefore, a chemical plant comprising at least one first production facility configured to produce fuel gas as by-product and at least one second production facility arranged downstream from the first production facility are provided. The second production facility is configured to consume fuel gas produced by the at least one first production facility. The consumption of the fuel gas refers to an operation, where fuel gas from the at least one first production facility is not stored but the produced fuel gas is directly used by the second production facility. If the amount of fuel gas produced by the at least one first production facility is not sufficient for the operation of the at least one second production facility, the second production facility may consume natural gas stored in a storage facility. The chemical plant furthermore comprises a controller to control an operation of the at least one second production facility based on a first objective function to reduce a temporal variation of the consumption of the fuel gas by the second production facility and/or a second objective function to reduce the deviation of a demand of fuel gas by the second production facility. The control is performed with a constraint that the second production facility does not consume more gas than the amount of fuel gas produced by the at least one first production facility. In other words, the controller performs its control based on an objective functions with two contributions and one constraint.

In an example, the controller can use a quadratic objective function to determine the operation of the at least one second production facility.

In an example, the amount of fuel-gas consumed by the downstream plant is approximated by Fourier series. The fuel-gas demand u is entered into the objective function, and is evaluated at selected points in time. The Fourier coefficients can be adapted to optimally meet the objective function while ensuring that the consumption of fuel gas by the second production facility is equal to or smaller than the fuel gas produced by the first production facility.

According to an aspect of the invention, a method of controlling a chemical plant or a plurality of chemical plants is provided. The chemical plant or plants comprise at least one first production facility configured to produce fuel gas as a product or as a by-product and at least one second production facility arranged downstream from the first production facility and being configured to consume fuel gas produced by the at least one first production facility and consume natural gas if an amount of fuel gas produced by the first production facility is not sufficient for an operation of the at least one second production facility. The first and second production facility can be arranged in one chemical plant or can be arranged in different chemical plants. An operation of the at least one second production facility is controlled based on a first term in an objective function to reduce a temporal variation of a consumption of fuel gas by the second production facility and/or a second term in the objective function to reduce a deviation of a demand for fuel gas by the second production facility with a constraint that the second production facility does not consume more gas than the amount of fuel gas provided by the at least one first production facility.

According to an aspect of the invention, a computer program is provided for controlling an operation of a chemical plant, the program comprising code means causing the controller to execute a method as described above, when the program is run on a computer controlling the chemical plant.

Chemical plants may produce a product via one or more chemical processes transforming a feedstock via one or more intermediate products to a product. A chemical plant can provide an encapsulated facility producing a product that may be used as feedstock in the next step in the value chain. Chemical plants can be large scale plants like oil and gas facilities, gas cleaning plants, carbon dioxide capture facilities, liquefied natural gas plants, oil refineries, petrochemical facilities or chemical facilities.

Upstream chemical plants in petrochemical process production can for example include a steam cracker starting with naphthalene processed by ethylene and propylene. These upstream products may then further be provided to a further chemical plant to derive downstream products such as polyethylene or polypropylene which may then serve as feedstock for chemical plants deriving further downstream products.

Chemical plants may be used in manufacture discrete products. In one example, one chemical plant may be used in manufacture precursors from polyethylene foam. Such precursors may be provided to a second production facility for the manufacturer of discrete products such as an isolation plate comprising polyethylene foam.

Fuel gas refers to a gas not being created naturally, but resulting from a chemical production process, such as those happening in the cracker. It is chemically similar to natural gas, but with potentially varying concentrations of the constituents Hydrocarbon, Carbon Dioxide and Nitrogen.

It should be noted that the aspects described above and specifically the method for the chemical plant of claim 1, the method of controlling the chemical plant according to claim 4 and the computer program of claim 7 have similar and/or identical preferred embodiments, in particular as defined in the dependent claims.

It shall be understood that a preferred embodiment or aspect of the present invention can also be any combination of the dependent claims or above embodiments or aspects with the respective independent claims.

These and other aspects of the present invention will be apparent from and elucidated with reference to the embodiments or aspects described hereinafter.

BRIEF DESCRIPTION OF THE DRAWINGS

In the following drawings:

Fig. 1    shows a schematic representation of a chemical plant,

Fig. 2    shows a further schematic interaction of multiple chemical plants,

Fig. 3    shows a graph representing consumption profiles of a fuel gas supply and a fuel gas supply, and

Fig. 4    shows a further schematic interaction of multiple chemical plants.

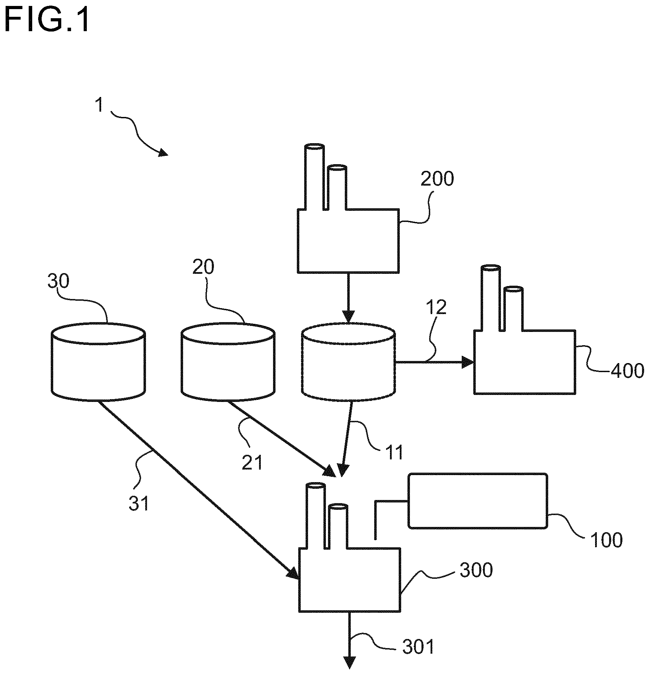

Fig. 1 shows a schematic representation of a chemical plant. A chemical plant 1 can comprise at least one first production facility 200 and at least one production facility 300 which is downstream from the at least one first production facility 200. The at least one first production facility 200 produces fuel gas 11, for example, as a by-product or as a product. The fuel gas 11 is used by the second production facility 300 for chemical processing to produce an output 301. A controller 100 can be provided to control an operation of the at least one second production facility 300. In the chemical plant, a first storage 20 for natural gas 21 and a second storage for other feedstocks 31 can be provided. The second production facility 300 consumes the fuel gas 11. However, if the second production facility 300 cannot consume sufficient fuel gas 11, the excessive fuel gas 12 must be incinerated in an incineration 400. It should be noted that the fuel gas 11 cannot be stored - in the given setup to save space and costs - between the first and second production facility. Thus, any surplus fuel gas must be incinerated in the incineration 400 or be consumed by the second production facility.

On the other hand, if the first production facility 200 does not produce sufficient fuel gas 11 for the operation of the second production facility 300, the second production facility 300 must consume additional natural gas 21 from the natural gas storage 20.

The second production facility 300 may also require a feedstock 31 from a feedstock storage 30.

The controller 100 controls an operation of the second production facility 300 in order to achieve two goals, namely to reduce a temporal variation of the consumption of the fuel gas and/or to reduce a deviation of a demand for fuel gas by the second production facility. This control can be performed with the constraint that the second production facility does not consume more gas than produced by the first production facility. In other words, the operation of the second production facility must be adapted to the fuel gas supply from the first production facility.

The controller 100 can perform the control of the second production facility 300 based on a quadratic objective function, wherein one term corresponds to the reduction of temporal variation of a consumption of fuel gas by the second production facility and a second term relates to a reduction in deviation of a demand for fuel gas by the second production facility. The quadratic objective function can be described by a Fourier series, wherein the Fourier coefficients are adapted by the proposed algorithm such that the fuel gas consumption is equal to or smaller than the fuel gas supply by the first production facility.

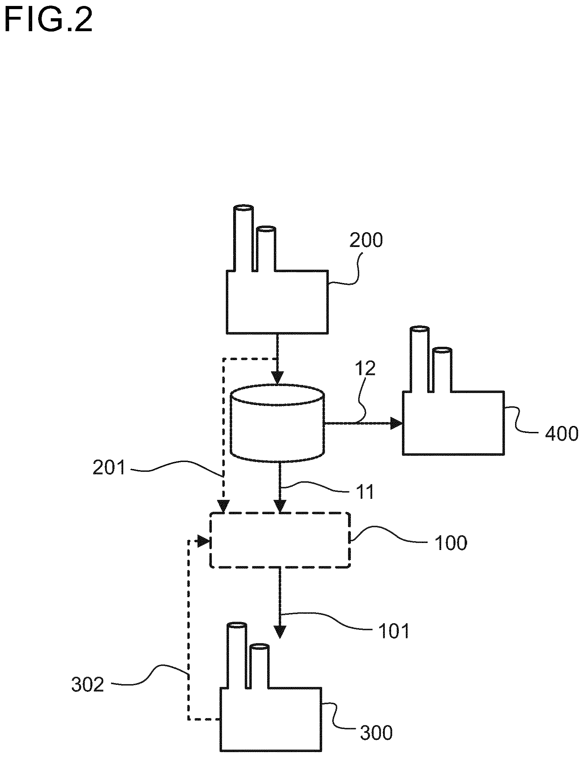

Fig. 2 shows a further schematic interaction of multiple chemical plants. In Fig. 2, a first and second production facility 200, 300 are provided, wherein the second production facility 300 is downstream from the first production facility 200. The first production facility 200 produces fuel gas 11, for example, as a by-product or as a product and forwards the fuel gas 11 to the second production facility 300. A controller 100 is provided which controls an operation of the second production facility 300. The controller 100 serves to enable an optimal fuel gas 11 consumption by the second production facility 300. The controller 100 can receive a demand 302 from the second production facility 300 as well as supply information 201 from the first production facility 200 in order to determine the optimal fuel gas consumption. If the second production facility 300 cannot consume the amount of fuel gas provided, then a surplus amount of fuel gas is incinerated in an incineration unit 400.

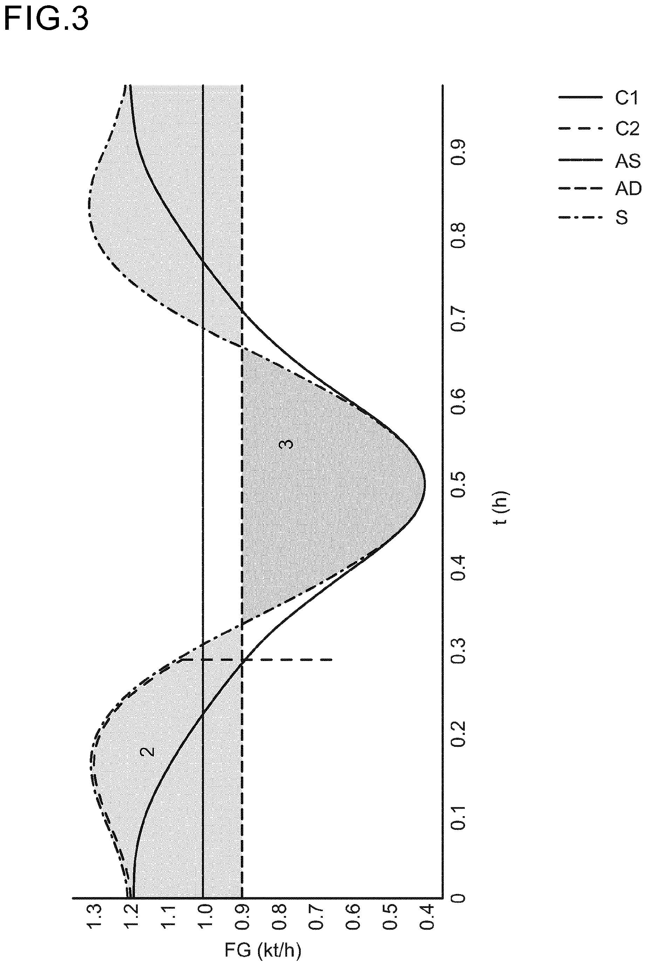

Fig. 3 shows a graph representing a fuel gas supply and a consumption of fuel gas. In Fig. 3, an application example is depicted. Here, the first area 2 relates to a situation, where more fuel gas is produced than the average demand. The second area 3 relates to a situation where less fuel gas is produced than required by the second production facility on average. Furthermore, in Fig. 3 a first and second consumption C1, C2 is depicted. Furthermore, an average supply AS, an average demand AD and a supply S is depicted. An average demand can be achieved by different demand profiles which can add up in an integral sense.

In Fig. 3, a supply function changing over a planning horizon of T = 1 hour is depicted. In the second production facility (downstream production), a target demand of 0.9 kt should be fulfilled within the planning horizon T.

Several control mechanisms are applicable for the controller. In a first control mechanism, a constant consumption of the fuel gas by the second production facility is provided. Accordingly, no or minimal variation of the downstream production is given by a constant supply of fuel gas. This, however, will require that additional natural gas is consumed by the second production facility in area 3. Here, the level of the consumption of the fuel gas can be set to the average target demand AD. This will fulfil the target demand within the planning horizon. However, as the first production facility can only provide a non-constant supply function, the second production facility will require at certain times more fuel gas than provided by the first production facility. Here, the additionally required gas can be supplied from a natural gas storage introducing additional costs. In other times of the same scenario, more fuel gas is supplied than required by the second production facility, leading to an incineration of the surplus of fuel gas introducing carbon-based emissions and financial losses.

In the example of Fig. 3, the additionally required natural gas is 0.10 kt which amounts to 11.61% of the target amount of 0.9 kt.

The second consumption profile C2 represents a control operation, where the entire available fuel gas is used at each point of time until the target demand is met and then the operation stops disruptively. However, it should be noted that such a production behavior is not feasible in any real production facility as it is only possible to slowly reduce the production in the second production facility creating additional downstream products which may be storable. However, the consumption profile is not desirable as it will result in a high temporal gradient. Therefore, the consumption profile C2 is not desirable.

In Fig. 3, a further consumption profile C1 is depicted which corresponds to the optimal consumption according to one embodiment of the invention. The consumption profile C1 refers to the operation resulting from meeting the proposed objective function with the above-mentioned constraint. As can be seen from Fig. 3, the consumption profile C1 has significantly smaller temporal gradients compared to the consumption profile C2, while still meeting the target demand within the planning horizon. Furthermore, the consumption of the fuel gas is always smaller than the amount of fuel gas supplied by the first production facility. This is advantageous as no additional natural gas is required by the second production facility.

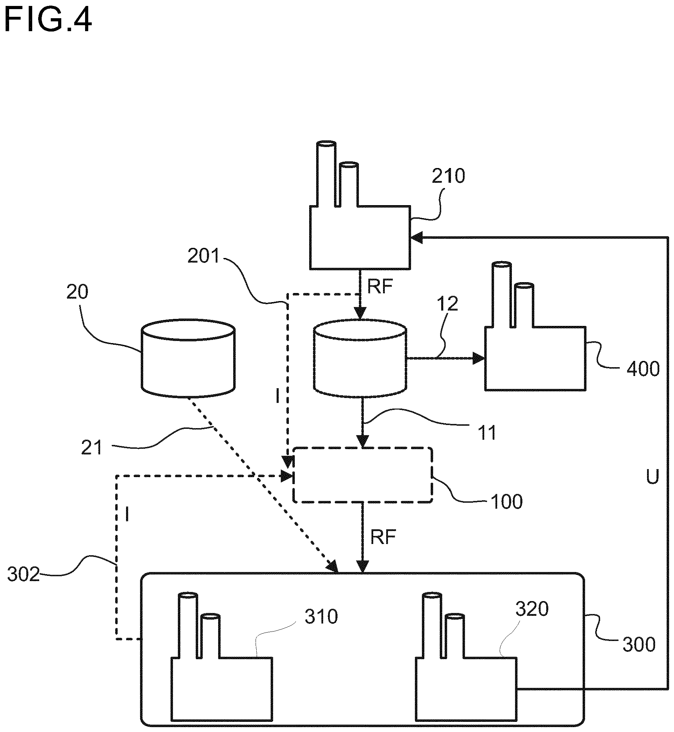

Fig. 4 shows a further schematic representation of a chemical plant. A chemical plant comprises a first production facility 200, for example, in form of a cracker. The chemical plant furthermore comprises at least one second production facility 300, for example, in form of syngas 310 and a boiler 320. The operation of the chemical plant according to Fig. 4 can substantially correspond to the operation of the chemical plant according to Fig. 1 or Fig. 2.

The cracker 210 produces fuel gas 11 which is supplied to the second production facility 200, namely, the syngas 310 and the boiler 320. A controller 100 is also present which can implement the desired algorithm. The controller 100 receives supply information 201, I from the cracker 210 as well as demand information 302, I from the second production facility 300 and determine an optimal fuel consumption by the second production facility 300. Optionally, a natural gas storage 20 is provided. The natural gas 20 can be supplied to the second production facility 300 if not sufficient fuel gas 11 is provided.

Optionally, the boiler 310 can provide steam U to the cracker of the first production facility 210.

The controller 100 can be able to determine the optimal operation of the second production facility 300 based on a quadratic objective function (consisting of a term to reduce the temporal variation of the downstream production capacity) and a term to reduce the deviation of the fuel gas demand). The quadratic objective function can be expressed by a Fourier series to model a time-dependent production signal $u$. The coefficients of the Fourier series are variables to be optimized. A Fourier series has the advantage to be differentiable while approximating all $L^2$ integrable functions,

$$u(t) = \sum_{i=0}^{n} s_i \sin\left(2\pi i \frac{t}{T}\right) + c_i \cos\left(2\pi i \frac{t}{T}\right). \qquad (1)$$

Here, $T \in \mathbb{R}$ is the time period and $c_i \in \mathbb{R}, s_i \in \mathbb{R}$, $i \in [0..n]$, $n \in \mathbb{N}^+$ coefficients from the set of real numbers. The optimization problem can be stated in the following way,

$$min_{c,s,T}\left(D - \int_{t_1}^{t_2} u(t)dt\right)^2 + \eta \sum_{t \in \Delta}\left(\frac{d}{dt}u(t)\right)^2 \quad (2a)$$

$$\text{s.t.}\ \ u(t) \leq S(t), \quad \forall t \in \Delta\ (2b)$$

Here, $\eta$ is a weighting coefficient and T is a set of discrete testing times to evaluate the objective function and the constraints. The Equation 2a states the task to minimize both the deviation of the used fuel gas *u* to the demand fuel gas *d* and the temporal variation of the used fuel gas to ensure a stable production. For the optimization problem, we consider a fixed time horizon $t_1, t_2 \in \mathbb{R}^+$, for which the demand *D* is defined. Equation 2b ensures that the used fuel gas is limited by the supply *s* for all considered times.

Note that $\eta$ and n act as parameters to be defined for the problem, and are not being optimized.

According to an aspect, the algorithm for controlling the second production facility defines a demand signal u for the consumption of fuel gas of the downstream plant (the second production facility). The proposed Fourier series can represent any L2 integrable function as mentioned above, which is a significant amount of possible control functions. The only parameters are the Fourier coefficients itself, the number n of contributions to the sum (defining the number of Fourier coefficients) and the period length T. All of these parameters directly influence the demand function u itself from the perspective of the downstream plant.

Fuel gas refers to a gas not being created naturally, but resulting from a chemical production process, such as those happening in the cracker. It is chemically similar to natural gas, but with potentially varying concentrations of the constituents Hydrocarbon, Carbon Dioxide and Nitrogen.

Other use cases could be the reduction of CO2 emissions or the increase of energy efficiency. Also, further plant configurations other than the one mentioned here with Cracker and Syngas could be possible.

A single unit device or system may fulfil the functions of several items recited in the claims. The mere fact that certain measures are recited in mutually different dependent claims does not indicate that a combination of these measures cannot be used to advantage. Procedures performed by one or several units or devices can be performed by any other number of units, devices or systems. These procedures can be implemented as a program code means of a computer program and/or as dedicated hardware. A computer program product may be stored/distributed on a suitable medium such as an optical storage medium or a solid state medium supplied together with or as part of other hardware but may also be distributed in other form such as via the internet or other wired or wireless telecommunication systems.

Any reference signs in the claims should not be constructed as limiting the scope.

List of reference signs

| | |
|---|---|
| 1 | chemical plant |
| 2 | first area |
| 3 | second area |
| 11 | fuel gas |
| 20 | first storage |
| 21 | natural gas |
| 30 | feedstock storage |
| 31 | feedstock |
| 100 | controller |
| 200 | first production facility |
| 210 | cracker |
| 300 | second production facility |

301 output
302 demand
310 syngas
320 boiler
400 incineration
AD average demand
AS average supply
S supply

## Claims

1. A chemical plant (1), comprising

   - at least one first production facility (200) configured to produce fuel gas (201) as a product or as a by-product,
   - at least one second production facility (300) arranged downstream from the first production facility (200) and being configured to consume fuel gas (201) produced by the at least one first production facility (200) and to consume natural gas if an amount of fuel gas produced by the first production facility is not sufficient for an operation of the at least one second production facility (300), and
   - a controller (100) configured to control an operation of the at least one second production facility (300) based on a term in an objective function to reduce a temporal variation of a consumption of fuel gas by the second production facility (300) and a second term in the objective function to reduce a deviation of a demand for fuel gas by the second production facility (300) with a constraint that the second production facility does not consume more gas than the amount of fuel gas provided by the at least one first production facility (200).

2. A chemical plant (1) according to claim 1, wherein
   the controller (100) is configured to use a quadratic objective function consisting of two different contributions having different values to determine the operation of the at least one second production facility.

3. A chemical plant (1) according to claim 2, wherein
   the controller is configured to define the quadratic objective function by adapting Fourier coefficients to ensure that the consumption of fuel gas by the second production facility is equal to or smaller than the fuel gas produced by the first production facility.

4. Method for controlling a chemical plant (1) or a plurality of chemical plants, which comprises at least one first production facility (200) configured to produce fuel gas (201) as a product or as a by-product, and at least one second production facility (300) arranged downstream from the first production facility (200) and being configured to consume fuel gas (201) produced by the at least one first production facility (200) and to consume natural gas if an amount of fuel gas produced by the first production facility is not sufficient for an operation of the at least one second production facility (300), comprising the steps of

   - controlling an operation of the at least one second production facility (300) based on a first term in an objective function to reduce a temporal variation of a consumption of fuel gas by the second production facility (300) and/or a second term in the objective function to reduce a deviation of a demand for fuel gas by the second production facility (300) with a constraint that the second production facility does not consume more gas than the amount of fuel gas provided by the at least one first production facility (200).

5. Method for controlling a chemical plant (1) or a plurality of chemical plants according to claim 4, comprising the step of:
   determining the operation of the at least one second production facility by using a quadratic objective function consisting of two different contributions having different values.

6. Method for controlling a chemical plant (1) or a plurality of chemical plants according to claim 4, comprising the step of:
   defining the quadratic objective function by adapting Fourier coefficients to ensure that the consumption of fuel gas by the second production facility (300) is equal to or smaller than the fuel gas produced by the first production facility (200).

7. A computer program for controlling a chemical plant (1), the program comprising code means causing the controller to execute a method according to any one of the claims 4 to 6, when the program is run on a computer controlling the chemical plant.

FIG.1

# FIG.2

# FIG.3

C1 ——
C2 ----
AS ——
AD ----
S —·—·—

FG (kt/h)

t (h)

# FIG.4

Europäisches
Patentamt

European
Patent Office

Office européen
des brevets

# EUROPEAN SEARCH REPORT

Application Number

EP 23 19 3635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/171836 A1 (PUROLA VELI MATTI [FI]) 10 June 2021 (2021-06-10) * paragraph [0001] - paragraph [0217] * ----- | 1-7 | INV. G06Q10/063 |
| Y | WO 2023/154408 A1 (JOHNSON CONTROLS TYCO IP HOLDINGS LLP [US]) 17 August 2023 (2023-08-17) * paragraph [0002] - paragraph [0376]; claim 1; figures 1-30 * ----- | 1-7 | |
| A | US 2007/227187 A1 (COWARD BRIAN A [GB]) 4 October 2007 (2007-10-04) * paragraph [0002] - paragraph [0217]; claim 1; figures 1-7 * ----- | 1-7 | |
| A | US 2021/334724 A1 (PRZYBYLSKI ANDREW J [US] ET AL) 28 October 2021 (2021-10-28) * paragraph [0001] - paragraph [0413]; claim 1; figures 1-24 * ----- | 1-7 | |
| | | | **TECHNICAL FIELDS SEARCHED (IPC)** |
| | | | G06Q C10G G05B |

The present search report has been drawn up for all claims

| Place of search | Date of completion of the search | Examiner |
|---|---|---|
| Munich | 6 February 2024 | Viets, Ana |

EPO FORM 1503 03.82 (P04C01)

## ANNEX TO THE EUROPEAN SEARCH REPORT
## ON EUROPEAN PATENT APPLICATION NO.

EP 23 19 3635

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | | Publication date | Patent family member(s) | | | Publication date |
|---|---|---|---|---|---|---|---|
| US 2021171836 | A1 | | 10-06-2021 | BR | 112022010861 | A2 | 23-08-2022 |
| | | | | CA | 3163958 | A1 | 17-06-2021 |
| | | | | CN | 114787322 | A | 22-07-2022 |
| | | | | EP | 4073207 | A1 | 19-10-2022 |
| | | | | JP | 2022552428 | A | 15-12-2022 |
| | | | | JP | 2023126810 | A | 12-09-2023 |
| | | | | JP | 2023156272 | A | 24-10-2023 |
| | | | | KR | 20220107064 | A | 01-08-2022 |
| | | | | US | 2021171836 | A1 | 10-06-2021 |
| | | | | WO | 2021116530 | A1 | 17-06-2021 |
| WO 2023154408 | A1 | | 17-08-2023 | NONE | | | |
| US 2007227187 | A1 | | 04-10-2007 | CA | 2658530 | A1 | 18-10-2007 |
| | | | | CN | 101460900 | A | 17-06-2009 |
| | | | | JP | 2010523924 | A | 15-07-2010 |
| | | | | US | 2007227187 | A1 | 04-10-2007 |
| | | | | WO | 2007117717 | A2 | 18-10-2007 |
| US 2021334724 | A1 | | 28-10-2021 | NONE | | | |

For more details about this annex : see Official Journal of the European Patent Office, No. 12/82